# EUROPÄISCHE PATENTSCHRIFT

(11) **EP 3 807 136 B1**
(45) Veröffentlichungstag und Bekanntmachung des Hinweises auf die Patenterteilung: **09.08.2023**
(21) Anmeldenummer: 19732919.6
(22) Anmeldetag: 06.06.2019
(51) Int. Cl.: B60W 10/06, B60W 10/08, B60W 20/12, B60W 50/00, B60W 10/10, B60W 30/18, B60W 50/14, B60W 20/20

(54) **VERFAHREN ZUM BETRIEB EINES FAHRZEUGES**
METHOD FOR OPERATING A VEHICLE
PROCÉDÉ DE FONCTIONNEMENT D'UN VÉHICULE

(30) Priorität: 13.06.2018 DE 102018209453
(43) Veröffentlichungstag der Anmeldung: 21.04.2021
(73) Patentinhaber: VOLKSWAGEN AKTIENGESELLSCHAFT, 38440 Wolfsburg (DE)
(72) Erfinder: BRUNS, Christian, 38104 Braunschweig (DE); KRUSCHA, Tatjana, 38106 Braunschweig (DE); KWASNY, Julia, 38440 Wolfsburg (DE); KÖSTERMANN, Janis, 10557 Berlin (DE)
(86) Internationale Anmeldenummer: PCT/EP2019/064896
(87) Internationale Veröffentlichungsnummer: WO 2019/238545

(56) Entgegenhaltungen:
- EP-A1- 2 689 982
- WO-A1-2016/202360
- WO-A1-2017/134471

## Beschreibung

Die Erfindung betrifft ein Verfahren zum Betrieb eines Fahrzeuges nach dem Oberbegriff des unabhängigen Verfahrensanspruches. Zudem betrifft die Erfindung eine Vorrichtung zum Betrieb eines Fahrzeuges nach dem Oberbegriff des unabhängigen Vorrichtungsanspruches. Ferner betrifft die Erfindung ein Fahrzeug mit einer entsprechenden Vorrichtung.

Städte und Gemeinden versuchen vermehrt, einen Einfluss auf die Luftqualität zu nehmen und die Fahrsicherheit zu erhöhen. Bisher werden Städte und Gemeinden in unterschiedliche statische Zonen unterteilt, die durch die Fahrzeuge mit geeigneten Schadstoffqualifikationen befahren werden dürfen. Nachteilig ist dabei, dass bei solcher statischen Unterteilung in Zonen wichtige Aspekte unberücksichtigt bleiben, wie zum Beispiel die aktuelle Verkehrssituation, die aktuelle Luftqualität und außerdem die verschiedensten Möglichkeiten, ein Fahrzeug mit mehreren Antriebseinheiten in unterschiedlichen Betriebsmodi anzutreiben und/oder ein Fahrzeug sogar mit nur einer Antriebseinheit intelligent anzusteuern.

Die Schrift WO 2017/134471 A1 offenbart ein Verfahren zum Betrieb eines Fahrzeuges mit einem Sensor, der den Verschmutzungsgrad entlang einer vorhergesagten Route erkennt. Die Schrift WO 2016/202360 A1 offenbart das Verhalten eines Fahrzeuges entlang einer Route auf der ebenfalls Umwelteinflüsse mit einbezogen werden. Die Schrift EP 2 689 982 A1 offenbart ein Verfahren ein System zu Steuerung eines Hybridautos, dass in eine geplante Route erkannte Verschmutzungen mit einbezieht.

Die Aufgabe der Erfindung ist es daher, mindestens einen aus dem Stand der Technik bekannten Nachteil zumindest teilweise zu überwinden. Insbesondere ist es Aufgabe der Erfindung, beim Betrieb des Fahrzeuges einen verbesserten Einfluss auf die Luftqualität sowie die Fahrsicherheit in Städten und Gemeinden bereitzustellen. Zudem ist es Aufgabe der Erfindung, ein Verfahren zum Betrieb eines Fahrzeuges zu schaffen, welches zeitnah, vorausschauend und dynamisch auf die aktuelle Luftqualität reagieren kann und welches die gegebenen Möglichkeiten in einem bestimmten Fahrzeug auf eine vorteilhafte Weise ausschöpfen kann, um die Schadstoffausstöße und Lärmbelästigung zu reduzieren.

Die erfindungsgemäße Aufgabe wird durch ein Verfahren zum Betrieb eines Fahrzeuges mit den Merkmalen des unabhängigen Verfahrensanspruches, insbesondere aus dem kennzeichnenden Teil, gelöst. Zudem wird die erfindungsgemäße Aufgabe durch eine Vorrichtung zum Betrieb eines Fahrzeuges mit den Merkmalen des unabhängigen Vorrichtungsanspruches, insbesondere aus dem kennzeichnenden Teil, und durch ein Fahrzeug gelöst. In den abhängigen Ansprüchen sind bevorzugte Weiterbildungen der Erfindung aufgeführt.

Die Erfindung stellt ein Verfahren zum Betrieb eines Fahrzeuges bereit, welches mindestens eine Antriebseinheit und/oder eine Getriebeeinheit aufweist, wobei eine Steuereinheit vorgesehen ist, um die mindestens eine Antriebseinheit und/oder die Getriebeeinheit anzusteuern, wobei mindestens eine Sensoreinheit vorgesehen ist, um mindestens einen fahrzeugexternen Parameter zu erfassen, und wobei die Steuereinheit mit der mindestens einen Sensoreinheit in einer Kommunikationsverbindung steht, um den mindestens einen fahrzeugexternen Parameter zu erhalten, insbesondere abzufragen, vorzugsweise aktiv abzufragen. Hierzu ist es erfindungsgemäß vorgesehen, dass die Steuereinheit dazu dient, den mindestens einen fahrzeugexternen Parameter auszuwerten und eine Prognose für den mindestens einen fahrzeugexternen Parameter in Abhängigkeit von einer zu erwartenden Fahrstrecke des Fahrzeuges zu erstellen, und dass die Steuereinheit beim Ansteuern der mindestens einen Antriebseinheit und/oder der Getriebeeinheit die Prognose für den fahrzeugexternen Parameter berücksichtigt.

Als Antriebseinheiten können dabei Verbrennungskraftmaschinen zusammen mit Elektromaschinen dienen. Letztere können weiterhin einen regenerativen Modus aufweisen. Darüber hinaus können die Fahrzeuge im Sinne der Erfindung über eine elektrische, vorzugsweise wiederaufladbare, Speichereinheit verfügen. Zudem können als Fahrzeuge im Sinne der Erfindung auch Fahrzeuge mit Hybridantrieben oder mit gemischten Antrieben verstanden werden. Als Getriebeeinheiten im Sinne der Erfindung kommen Schaltgetriebe oder Automatikgetriebe in Frage.

Bei Verbrennungskraftmaschinen im Sinne der Erfindung sind zum Beispiel Erdgas, Benzin, Diesel, LPG, Biokraftstoffe oder Wasserstoff als mögliche Kraftstoffe denkbar. Zudem sind als Verbrennungskraftmaschinen im Sinne der Erfindung bivalente Antriebe denkbar, die zwei unterschiedliche Kraftstoffe verarbeiten können, wie zum Beispiel Erdgas oder Benzin.

In Fahrzeugen mit mehreren Antriebseinheiten können verschiedene Betriebsmodi realisiert werden, wobei jedem Betriebsmodus eine bestimmte Antriebseinheit oder eine Kombination an Antriebseinheiten zugeordnet wird. Ferner kann ein regenerativer Betriebsmodus vorgesehen sein, bei dem eine Elektromaschine im Generatormodus betrieben wird. Jeder Betriebsmodus im Sinne der Erfindung kann eine dynamisch aktualisierbare Präferenz zum Betrieb des Fahrzeuges durch die Steuereinheit erhalten. Beim Zuordnen von Präferenzen für unterschiedliche Betriebsmodi werden im Sinne der Erfindung die Energieeffizienz bei Betrieb des Fahrzeuges sowie die (aktuelle und erwartete) Lärm- und Schadstoffbelastung der Umgebung berücksichtigt.

Aber auch bei Fahrzeugen mit nur einer Antriebseinheit können durch eine intelligente Wahl der Betriebsparameter der Antriebseinheit und/oder der Getriebeeinheit, beispielweise durch eine entsprechende Ansteuerung der Getriebeeinheit, die Schadstoffwerte sowie die Lärmwerte in der unmittelbaren Umgebung des Fahrzeuges sowie die Energieeffizienz beim Betrieb des Fahrzeuges beeinflusst werden. Dies ist nicht Teil der beanspruchten Erfindung. Weiterhin kann die Steuereinheit neben dem Ansteuern der mindestens einen Antriebseinheit und/oder der Getriebeeinheit auch weitere fahrzeugseitige Einstellungen ansteuern, wie zum Beispiel die Einstellungen eines Soundgenerators. Denkbar ist dabei, dass die Steuereinheit den Soundgenerator deaktivieren kann, wenn die Prognose für den fahrzeugexternen Parameter, die einen zu erwarteten Lärmpegel umfassen kann, eine Lärmschutzzone voraussieht.

Die mindestens eine Sensoreinheit im Sinne der Erfindung kann unterschiedliche Arten an Sensoren umfassen, wie zum Beispiel eine Kamera, einen Radar, einen Kapazitätssensor, eine Elektrode, usw. Die Sensoreinheit im Sinne der Erfindung kann zumindest dazu imstande sein, Informationen betreffend den fahrzeugexternen Parameter zu erhalten, beispielsweise wie eine Antenne zu empfangen. Die mindestens eine Sensoreinheit im Sinne der Erfindung kann weiterhin einen Teil eines Assistenzsystems bilden, wie zum Beispiel verschiedener Umweltbeobachtungssysteme, Schilderkennungssysteme usw.

Die Steuereinheit kann als eine speziell zum Ausführen des erfindungsgemäßen Verfahrens ausgebildete Steuereinheit oder als eine zentrale Steuereinheit des Fahrzeuges ausgebildet sein. Bei Fahrzeugen mit einer Funktion zum hochautomatisierten Fahren und/oder zum autonomen Fahren kann das erfindungsgemäße Verfahren im Rahmen der jeweiligen Funktion implementiert werden.

Die zu erwartende Fahrstrecke des Fahrzeuges kann die Steuereinheit von einem fahrzeuginternen oder fahrzeugexternen Navigationssystem erhalten. Bei Fahrzeugen mit einer Funktion zum hochautomatisierten Fahren und/oder zum autonomen Fahren ist es zudem denkbar, dass die zu erwartende Fahrstrecke direkt in der Steuereinheit bestimmt werden kann. Der Erfindungsgedanke liegt dabei darin, dass das Fahrzeug prädiktiv und somit besonders intelligent betrieben wird. Dabei werden nicht nur statische Informationen, wie zum Beispiel statisch festgelegte Umweltzonen, berücksichtigt, die als der mindestens eine fahrzeugexterne Parameter erfasst werden können, sondern auch prädiktive Informationen, die die Prognose für den mindestens einen fahrzeugexternen Parameter im Sinne der Erfindung bestimmen. Diese prädiktiven Informationen werden mithilfe der Steuereinheit anhand des mindestens einen erfassten fahrzeugexternen Parameters unter Berücksichtigung von Erfahrungswerten und/oder vorhandenen Navigationsdaten (umfassend ausgeschilderte Umweltzonen) vorausschauend ermittelt. So wird eine Innenstadt zu Stoßzeiten erfahrungsgemäß stärker befahren als zu den Abendstunden oder in der Nacht. Auch im Bereich von Kreuzungen mit vielen Ampeln wird eine schlechtere Luftqualität erwartet als auf einer Landstraße.

Die Erfindung erfasst vorteilhafterweise die aktuellen fahrzeugexternen Parameter (beispielsweise in Form der aktuellen Luftqualität und/oder des aktuellen Lärmpegels) und bestimmt somit die aktuellen Zonen auf der Fahrstrecke des Fahrzeuges. Das heißt, die Erfindung verifiziert die aktuellen Zonen aktiv und selbstständig. Dann erstellt die Erfindung eine Prognose für den mindestens einen fahrzeugexternen Parameter (beispielsweise in Form einer erwarteten Zone, einer prognostizierten Luftqualität und/oder eines prognostizierten Lärmpegels zu gegebener Zeit auf der zu erwarteten Fahrstrecke des Fahrzeuges). Dadurch kann auf die erwartete Zone, die prognostizierte Luftqualität und/oder den prognostizierten Lärmpegel entsprechend reagiert werden.

Darüber hinaus umfasst die intelligente Steuerung des Fahrzeuges im Sinne der Erfindung eine vorausschauende und dynamische Anpassung des Betriebes des Fahrzeuges an die erwartete Zone, die prognostizierte Luftqualität und/oder den erwarteten Lärmpegel auf der zu erwartenden Fahrstrecke des Fahrzeuges. Die intelligente Steuerung des Fahrzeuges im Sinne der Erfindung umfasst vorteilhafterweise die Wahl eines Betriebsmodus des Fahrzeuges oder mindestens eines Betriebsparameters mindestens einer Antriebseinheit und/oder der Getriebeeinheit, wie die Wahl eines Ganges der Getriebeeinheit, der Drehzahl der Antriebseinheit oder dergleichen, bei dem vorzugsweise der Schadstoffausstoß am geringsten ist. Dadurch kann auf die erwartete Umweltzone, die erwartete Luftqualität und/oder den erwarteten Lärmpegel vorausschauend reagiert werden.

Die erfindungsgemäße Steuereinheit greift aktiv in den Betrieb des Fahrzeuges ein. Weiterhin kann die Steuereinheit automatisch die Elektromaschine als Antriebseinheit bevorzugt verwenden, wenn mehrere Antriebsmöglichkeiten im Fahrzeug zur Verfügung stehen. Die Steuereinheit kann, zum Beispiel bei bivalenten Antrieben, auch den Betriebsmodus der Antriebseinheit bevorzugt verwenden, bei dem die Lärmbelastung und/oder der Schadstoffausstoß am geringsten ist. Darüber hinaus wird erfindungsgemäß das Fahrzeug verstärkt automatisch angesteuert, um optimale Betriebsparameter im Betrieb der Antriebseinheit (wie zum Beispiel Drehzahl) und der Getriebeeinheit (wie zum Beispiel Übersetzung oder Gang) sicherstellen zu können.

Ferner kann die Erfindung vorsehen, dass die mindestens eine Sensoreinheit die Luftqualität und/oder Lärmbelastung als den mindestens einen fahrzeugexternen Parameter erfasst, insbesondere mithilfe der mindestens einen Sensoreinheit erfasst. Die Luftqualität sowie die Lärmbelastung sind wichtige Parameter beim Bestimmen der tatsächlichen (und nicht nur statisch ausgeschilderten) Lärm- und Schadstoffschutzzonen. Mithilfe der tatsächlich erfassten Luftqualität und/oder Lärmbelastung kann unmittelbar an die aktuellen Verhältnisse reagiert werden, indem ein passender Betriebsmodus des Fahrzeuges und/oder Betriebsparameter beim Ansteuern der Antriebseinheit und/oder der Getriebeeinheit gewählt werden. Gleichwohl ist es aber auch denkbar, dass eine Umfahrung der Zone vorgeschlagen und/oder ein Verbot zum Benutzen der Verbrennungskraftmaschine generiert wird. Dabei kann durch die Steuereinheit eine alternative Route für das Fahrzeug ermittelt und/oder bestimmt werden. Weiterhin kann die Erfindung vorsehen, dass die Steuereinheit bei der zu erwartenden Strecke des Fahrzeuges die aktuelle Zeit, die geplante Abfahrzeit, die gewünschte Ankunftszeit, die aktuelle und erwartete Verkehrssituation und/oder Daten eines fahrzeuginternen und/oder eines fahrzeugexternen Navigationssystems berücksichtigt. Hierzu kann die Steuereinheit mit einem Navigationssystem in einer Kommunikationsverbindung stehen. Bei Fahrzeugen mit einer Funktion zum hochautomatisierten Fahren und/oder zum autonomen Fahren ist es daneben oder stattdessen denkbar, dass die Steuereinheit die Navigationsdaten selbst verarbeiten kann. Dadurch können die persönlichen Wünsche des Fahrers in die Steuerung des Fahrzeuges einfließen, die mit den aktuellen Verkehrsinformationen verglichen werden, um diese Wünsche optimal und eine berechtigte Art und Weise erfüllen zu können. Somit kann der Nutzerkomfort erheblich gesteigert werden.

Des Weiteren kann die Erfindung vorsehen, dass die Steuereinheit ein fahrzeuginternes Navigationssystem des Fahrzeuges überwacht und dynamisch in Abhängigkeit von der Prognose aktualisiert. Hierzu kann die Steuereinheit mit einem Navigationssystem in eine Kommunikationsverbindung stehen. Denkbar ist aber auch, dass das Navigationssystem im Rahmen der Steuereinheit implementiert werden kann. Somit kann beim Navigieren des Fahrzeuges die Fahrstrecke ausgewählt werden, welche durch das Fahrzeug durchgefahren werden kann, ohne eine Umweltzone unberechtigt zu befahren, und welche zum Betrieb des Fahrzeugs energetisch vorteilhaft ist. Durch die Prognose des Parameters und die prädiktive Steuerung des Fahrzeuges können außerdem typische, zu erwartende Verkehrssituationen zu bestimmten Zeiten und/oder auf bestimmten Streckenabschnitten und/oder bekannte Ampelschaltungen und dergleichen berücksichtigt werden. Auf diese Weise kann das Fahrzeug besonders effizient und umweltschonend navigiert werden. Auch gewinnt dadurch das Fahrzeug an einer vergrößerten Reichweite.

Außerdem kann die Erfindung vorsehen, dass die Steuereinheit die zu erwartende Fahrstrecke des Fahrzeuges in mindestens eine oder mehrere zu durchfahrende Zonen unterteilt. Dabei ist es denkbar, dass eine oder mehrere zu durchfahrende Zonen als der mindestens eine fahrzeugexterne Parameter erfasst werden, die beispielsweise von Verkehrsschildern abgelesen werden können. Ferner ist es denkbar, dass die zu durchfahrenden Zonen in Abhängigkeit von der Prognose für diese Zonen verifiziert werden. Im Rahmen der Prognose kann die Zeit berücksichtigt werden, wann das Fahrzeug voraussichtlich die jeweilige Zone passieren wird. Mit anderen Worten können die zu durchfahrenden Zonen im Rahmen der Erfindung dynamisch ermittelt werden. Somit können die unterschiedlichen zu durchfahrenden Zonen parametergetreu eingeteilt und auf eine vorteilhafte Weise individuell berücksichtigt werden. Hierbei kann jeder zu durchfahrenden Zone eine Einfahrbeschränkung zugeordnet werden. Ferner ist es denkbar, dass die Steuereinheit für jede der zu durchfahrenden Zonen prüft, ob das Fahrzeug in mindestens einem Betriebsmodus berechtigt ist, die Zone zu durchfahren. Auch hierbei kann die Zeit berücksichtigt werden, wann das Fahrzeug voraussichtlich die Zone passieren wird. Auch können bestimmte zu durchfahrende Zonen als Verbotszonen definiert werden, die generell oder zu gegebener Zeit umfahren werden müssen. Um die Verbotszonen zu umfahren, kann die Steuereinheit selbstständig oder in Zusammenarbeit mit einem Navigationssystem eine alternative Route für das Fahrzeug bestimmen und/oder dem Fahrer des Fahrzeuges vorschlagen. Solche prädiktiven Informationen helfen dabei, die Route optimal zu planen, Treibstoff und Energie beim Betrieb des Fahrzeuges zu sparen, die Umwelt zu schonen und die Lärmbelästigung zu reduzieren.

Ferner kann die Erfindung vorsehen, dass die Steuereinheit beim Ansteuern der mindestens einen Antriebseinheit und/oder der Getriebeeinheit die mindestens eine oder mehrere zu durchfahrende, vorzugsweise dynamisch ermittelten, Zonen und eine Berechtigung des Fahrzeuges, die Zonen in mindestens einem verfügbaren Betriebsmodus zu durchfahren, berücksichtigt. Bei der Überprüfung der Berechtigung des Fahrzeuges kann eine Einfuhrbeschränkung in die Zone berücksichtigt werden. Durch das vorausschauende Ermitteln der zu durchfahrenden Zonen und durch die Berücksichtigung der Berechtigung des Fahrzeuges kann ein ungewolltes-, unberechtigtes Einfahren in die Zonen vermieden werden, die durch das gegebene Fahrzeug nicht passiert werden dürfen. Weiterhin kann die Erfindung vorsehen, dass die Steuereinheit beim Betrieb des Fahrzeuges, welches eine Antriebseinheit in Form einer Verbrennungskraftmaschine aufweist, einen Betriebsmodus des Fahrzeuges, bei welchem die Verbrennungskraftmaschine betrieben wird, auf Berechtigung des Fahrzeuges prüft, mindestens eine oder mehrere zu durchfahrende Zonen in diesem Betriebsmodus zu durchfahren, und eine Freigabe oder ein Verbot erteilt, die Verbrennungskraftmaschine zu betreiben. Insbesondere bei Verbrennungskraftmaschinen muss darauf geachtet werden, dass die Schadstoffausstoße kontrolliert werden. Durch das erfindungsgemäße Verfahren wird rechtzeitig und vorausschauend erkannt, ob die geplante Fahrstrecke oder die einzelnen Abschnitte bzw. Zonen der Fahrstrecke durch die Verbrennungskraftmaschine absolviert werden dürfen. Dadurch wird sichergestellt, dass Verstöße gegen herrschende Fahrverbote reduziert bis gar vermieden werden.

Des Weiteren kann die Erfindung vorsehen, dass beim Betreiben der Verbrennungskraftmaschine die Getriebeeinheit automatisch angesteuert wird, um die Geschwindigkeit und den Schadstoffausstoß des Fahrzeuges zu optimieren. Hierbei ist es denkbar, dass bestimmte Betriebsparameter der Getriebeeinheit durch die Steuereinheit automatisch angepasst werden. Hierzu kann der gewählte Gang innerhalb der Getriebeeinheit und somit die Drehzahl der Antriebseinheit sowie die Geschwindigkeit des Fahrzeuges an die aktuellen Umweltzonen rechtzeitig angepasst werden.

Erfindungsgemäß ist vorgesehen, dass die Steuereinheit beim Betrieb des Fahrzeuges, welches mehrere Antriebseinheiten aufweist, unterschiedliche Betriebsmodi des Fahrzeuges auswertet, bei welchen verschiedene Antriebseinheiten einzeln oder in Kombination betrieben werden, und dem Betriebsmodus eine Präferenz zum Betrieb des Fahrzeuges erteilt, der ein höheres Maß an Automatisierung aufweist als die anderen Betriebsmodi, die ebenfalls eine Berechtigung zum Befahren der Fahrstrecke bzw. Zone haben.

Außerdem ist es im Rahmen der Erfindung denkbar, dass die Steuereinheit beim Ansteuern der mindestens einen Antriebseinheit und/oder der Getriebeeinheit mindestens einen fahrzeuginternen Parameter zur Energieeffizienz berücksichtigt. Hierbei ist es denkbar, dass der fahrzeuginterne Parameter einen aktuellen Ladezustand einer elektrischen Speichereinheit und/oder einen Mindestladezustand nach dem Befahren der zu erwartenden Fahrstrecke umfasst. Vorteilhafterweise können beim Ansteuern der mindestens einen Antriebseinheit und/oder der Getriebeeinheit die Abschnitte bzw. die Zonen innerhalb der Fahrstrecke bevorzugt werden, die eine Möglichkeit der Aufladung der elektrischen Speichereinheit bieten. Zudem kann die Erfindung vorsehen, dass die verfügbaren Aufladestellen für die elektrische Speichereinheit auf der Strecke berücksichtigt werden.

Weiterhin kann die Erfindung vorsehen, dass die Steuereinheit mit einem fahrzeugexternen Backendsystem in einer Kommunikationsverbindung steht, um die Berechtigung des Fahrzeuges zu verifizieren, die zu erwartende Fahrstrecke des Fahrzeuges in mindestens einem Betriebsmodus des Fahrzeuges zu durchfahren. Dabei ist es denkbar, dass die Berechtigung vom Backend überprüft, freigegeben, verboten oder einfach dokumentiert wird, um den Fahrer in einem Streitfall zu entlasten. Das Fahrzeug kann dabei an das Backendsystem melden, welche fahrzeugexternen Parameter gemessen, wie diese ausgewertet bzw. beurteilt wurden und welche Prognose für diese Parameter in Abhängigkeit von der zu erwartenden Fahrstrecke des Fahrzeuges erstellt wurde. Zudem kann das Fahrzeug an das Backendsystem melden, welche Zonen innerhalb der Fahrstrecke ermittelt wurden, die der tatsächlichen gemessenen Luftqualität entsprechen oder vorausschauend während der Fahrt entsprechen werden. Schließlich kann das Fahrzeug den ausgewählten Betriebsmodus und/oder die ausgewählten Betriebsparameter der Antriebseinheit und/oder der Getriebeeinheit dem Backendsystem melden, um seine Berechtigung zu verifizieren. Die Verifizierung der Berechtigung des Fahrzeuges, die zu erwartende Fahrstrecke des Fahrzeuges in mindestens einem Betriebsmodus des Fahrzeuges zu durchfahren, kann auch über ein Smartphone durchgeführt werden. Ist zum Beispiel eine Umweltzone aktiv geschaltet und fährt das Fahrzeug in diese hinein, so könnte ähnlich wie bei einer Schranke, Mauthäuschen o.ä. bei Durchfahrt die Erlaubnis mittels einer Smartphone-App geprüft werden, wobei das Fahrzeug mit dem Smartphone verbunden sein kann und die App den erlaubten Betriebsmodus per QR-Code, NFC o.ä. melden kann.

Nach einem weiteren Vorteil der Erfindung kann das fahrzeugexterne Backendsystem dem Fahrzeug Strafpunkte oder Bonuspunkte in Abhängigkeit von der befahrenen Fahrstrecke erteilen. Daraus ergeben sich verschiedenste Vorteile. Zum einen wird der Fahrer dadurch motiviert, die ermittelten Zonen zu berücksichtigen. Wird in der Zone nicht lokal emissionsfrei gefahren, erzeugt dies beispielsweise einen Malus (Strafpunkte, Strafzahlungen). Lokal emissionsfreier Fahrbetrieb bewirkt hingegen einen Bonus (Bonuspunkte, Ladeguthaben, Parkzeit- und/oder Parkplatzberechtigungen). Weiterhin kann das Backendsystem einfordern, dass eine Weiterfahrt unterbunden wird, wenn der Nutzer versucht, den lokal emissionsfreien Betrieb zu umgehen.

Zusammenfassend bringt die Erfindung verschiedene wesentliche Vorteile mit sich. Die Erfindung ermöglicht einen optimierten Betrieb eines Fahrzeuges, ein dynamisch aktualisierbares Navigationssystem auf Grundlage von erfassten Parametern bzw. gemessenen Sensorwerten und ein Befahren von unterschiedlichen Zonen weitestgehend geschwindigkeitsoptimiert, lärm- und schadstoffreduziert. Prädiktive Ansteuerung des Fahrzeuges ist weiterhin von Vorteil, weil aktiv überprüft wird, ob eine Zone besteht oder über die Fahrstrecke vorausschauend bestehen wird.

Die voranstehende Beschreibung beschreibt die vorliegende Erfindung ausschließlich im Rahmen von Beispielen.

Des Weiteren wird die erfindungsgemäße Aufgabe durch eine Vorrichtung zum Betrieb eines Fahrzeuges gelöst, wobei das Fahrzeug mehrere Antriebseinheiten und optional eine Getriebeeinheit aufweist. Die Vorrichtung umfasst dabei eine Steuereinheit, um die mehreren Antriebseinheiten und die optionale Getriebeeinheit anzusteuern, und mindestens eine Sensoreinheit, um mindestens einen fahrzeugexternen Parameter zu erfassen, wobei die Steuereinheit mit der mindestens einen Sensoreinheit in einer Kommunikationsverbindung steht, um den mindestens einen fahrzeugexternen Parameter zu erhalten. Erfindungsgemäß ist die Steuereinheit dazu ausgeführt, ein Verfahren auszuführen, welches wie oben beschrieben ablaufen kann. Mithilfe der erfindungsgemäßen Vorrichtung werden die gleichen Vorteile erreicht, die oben im Zusammenhang mit dem erfindungsgemäßen Verfahren beschrieben wurden. Auf diese Vorteile wird vorliegend vollumfänglich Bezug genommen.

Ferner wird die erfindungsgemäße Aufgabe durch ein Fahrzeug mit einer entsprechenden Vorrichtung gelöst. Auch dabei werden die gleichen Vorteile erreicht, die oben im Zusammenhang mit dem erfindungsgemäßen Verfahren beschrieben wurden.

Weitere, die Erfindung verbessernde Maßnahmen werden nachstehend mit der Beschreibung der bevorzugten Ausführungsbeispiele der Erfindung anhand der Figuren näher dargestellt. Dabei ist zu beachten, dass die Figuren nur einen beschreibenden Charakter haben und nicht dazu gedacht sind, die Erfindung in irgendeiner Form einzuschränken. Es zeigen:
- Fig. 1: eine schematische Darstellung einer Vorrichtung im Sinne der Erfindung,
- Fig. 2: eine schematische Darstellung einer Route zum Durchfahren oder Umfahren einer bekannten oder prognostizierten Zone durch ein Fahrzeug,
- Fig. 3: eine schematische Darstellung einer Route zum Durchfahren oder Umfahren einer bekannten oder prognostizierten Zone durch ein Fahrzeug, welches berechtigt ist, die Zone zu durchfahren,
- Fig. 4: eine schematische Darstellung einer Route zum Durchfahren oder Umfahren einer bekannten oder prognostizierten Zone durch ein Fahrzeug, welches berechtigt ist, die Zone zum Teil zu durchfahren, und
- Fig. 5: eine schematische Darstellung einer Route zum Durchfahren oder Umfahren einer bekannten oder prognostizierten Zone durch ein Fahrzeug, welches nicht berechtigt ist, die Zone zu durchfahren,

In den nachfolgenden Figuren werden für die gleichen technischen Merkmale auch von unterschiedlichen Ausführungsbeispielen die identischen Bezugszeichen verwendet.

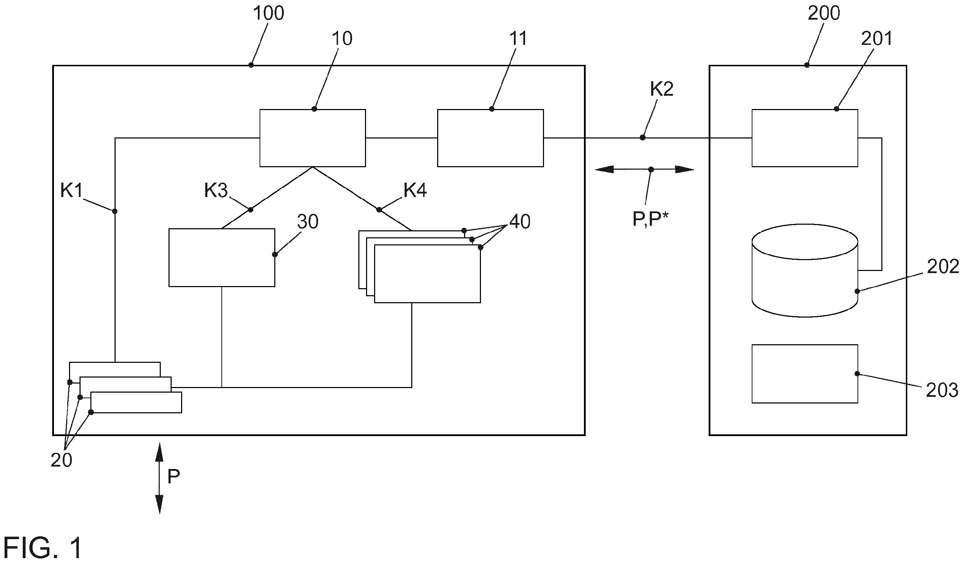

Die Figur 1 zeigt eine Vorrichtung 100 zum Betrieb eines Fahrzeuges, wobei das Fahrzeug mehrere Antriebseinheiten und optional eine Getriebeeinheit aufweist. Die Vorrichtung 100 umfasst dabei eine Steuereinheit 10 um die mehrere Antriebseinheiten und die optionale Getriebeeinheit anzusteuern, und mindestens eine Sensoreinheit 20, um mindestens einen fahrzeugexternen Parameter P zu erfassen, wobei die Steuereinheit 10 mit der mindestens einen Sensoreinheit 20 in einer Kommunikationsverbindung K1 steht, um den mindestens einen fahrzeugexternen Parameter P zu erhalten, beispielsweise aktiv abzufragen.

Die erfindungsgemäße Steuereinheit 10 dient dazu, den mindestens einen fahrzeugexternen Parameter P auszuwerten. Ferner kann die Steuereinheit 10 dazu dienen, eine Prognose P* für den mindestens einen fahrzeugexternen Parameter P in Abhängigkeit von einer zu erwartenden Fahrstrecke S des Fahrzeuges zu erstellen. Für die Kommunikationsverbindung K2 kann die Vorrichtung 100 eine fahrzeugseitige Sende- und Empfangseinheit 11 aufweisen. Das Backendsystem 200 kann ebenfalls eine Sende- und Empfangseinheit 201 aufweisen. Das Backendsystem 200 kann zudem einen Speicher 202 und eine Recheneinheit 203 aufweisen.

Die mindestens eine Sensoreinheit 20 im Sinne der Erfindung kann dabei unterschiedliche Arten an Sensoren umfassen. Manche Sensoren können mindestens einen fahrzeugexternen Parameter P als einen physikalischen Wert messen, beispielsweise in Form von Temperatur, Luftfeuchte, Lärmpegel usw. Manche Sensoren können Informationen messen, die ausgewertet werden können, um den fahrzeugexternen Parameter P zu erfassen. Denkbar ist hierbei eine Kamera, die ein Bild von einem Verkehrsschild aufnehmen kann, dieses Bild analysieren und daraus den fahrzeugexternen Parameter P bestimmen kann. Außerdem ist als die mindestens eine Sensoreinheit 20 im Sinne der Erfindung eine Antenne oder ein Empfangselement denkbar, die oder das dazu dient, Informationen zu empfangen, die zum Bestimmen des fahrzeugexternen Parameters P relevant sein können. So ist zum Beispiel eine Funktantenne als die mindestens eine Sensoreinheit 20 denkbar, die über Radiowellen bestimmte Informationen über Verkehrsunfälle, Staus usw. empfangen kann. Des Weiteren ist es denkbar, dass die Sensoreinheit 20 einen Teil eines Assistenzsystems 40 bilden kann, wie zum Beispiel verschiedener Umweltbeobachtungssysteme, Schilderkennungssysteme usw.

Die Steuereinheit 10 kann im Rahmen der Erfindung als eine speziell zum Ausführen des erfindungsgemäßen Verfahrens ausgebildete Steuereinheit 10 oder als eine zentrale Steuereinheit 10 des Fahrzeuges ausgebildet sein.

Die Steuereinheit 10 im Sinne der Erfindung kann weiterhin mit einem fahrzeuginternen Navigationssystem 30 in einer Kommunikationsverbindung K3 stehen. Dies kann vorteilhaft sein, um das Navigationssystem 30 mithilfe der Prognose P* für den fahrzeugexternen Parameter P zu aktualisieren und/oder um eine Navigationsroute zum Durchfahren oder Umfahren einer Verkehrszone zu bestimmen. Ferner kann die Steuereinheit 10 die zu erwartende Fahrstrecke S des Fahrzeuges im Sinne der Erfindung vom Navigationssystem 30 erhalten. Bei Fahrzeugen mit einer Funktion zum hochautomatisierten Fahren und/oder zum autonomen Fahren ist es zudem denkbar, dass die zu erwartende Fahrstrecke S direkt in der Steuereinheit 10 bestimmt werden kann.

Ferner kann die Steuereinheit 10 im Sinne der Erfindung mit mindestens einem Assistenzsystem 40 des Fahrzeuges in einer Kommunikationsverbindung K4 stehen, wie zum Beispiel einem Abstandsregeltempomat, gegebenenfalls mit einer Notbremsfunktion und einer Fußgängererkennung, einer Einparkhilfe usw.

Mithilfe der Vorrichtung 100 kann ein Verfahren zum Betrieb eines Fahrzeuges ausgeführt werden. Mithilfe des erfindungsgemäßen Verfahrens kann das Fahrzeug prädiktiv und somit besonders intelligent betrieben werden.

Mithilfe des Verfahrens wird mindestens ein fahrzeugexterner Parameter P erfasst, wie zum Beispiel eine ausgeschilderte Umweltzone, die herrschende Luftqualität und/oder aktuelle Lärmbelastung auf der zu erwartenden Fahrstrecke S des Fahrzeuges. Mithilfe des erfassten fahrzeugexternen Parameters P werden daraufhin prädiktive Informationen erstellt, die eine Prognose P* für den mindestens einen fahrzeugexternen Parameter P bestimmen. Die Prognose P* besagt zeitlich vorausschauend, wie sich der fahrzeugexterne Parameter P voraussichtlich zu einem bestimmten Zeitpunkt, zumindest auf einem bestimmten Abschnitt der zu erwartenden Fahrstrecke S des Fahrzeuges, entwickeln wird. Beim Erstellen der Prognose P* können Erfahrungswerte in Hinblick auf den fahrzeugexternen Parameter P, Informationen von dem Radiosender und/oder Informationen von dem Navigationssystem 30, beispielsweise über die erwartete Verkehrssituation, berücksichtigt werden. Zudem können beim Erstellen der Prognose P* die aktuelle Zeit, die geplante Abfahrtzeit, die gewünschte Ankunftszeit, die aktuelle und und/oder Daten aus dem Navigationssystems 30 berücksichtigt werden.

Die intelligente Steuerung des Fahrzeuges gemäß dem erfindungsgemäßen Verfahren umfasst vorteilhafterweise die Wahl eines Betriebsmodus des Fahrzeuges oder zumindest eines Betriebsparameters mindestens einer Antriebseinheit und/oder der Getriebeeinheit, wie die Wahl eines Ganges der Getriebeeinheit, der Drehzahl der Antriebseinheit oder dergleichen.

In Fahrzeugen mit mehreren Antriebseinheiten können verschiedene Betriebsmodi realisiert werden, wobei jedem Betriebsmodus eine bestimmte Antriebseinheit oder eine Kombination an Antriebseinheiten zugeordnet wird. Ferner kann ein regenerativer Betriebsmodus vorgesehen sein, bei dem eine Elektromaschine im Generatormodus betrieben wird. Bei der Wahl eines bevorzugten und/oder erlaubten Betriebsmodus können im Sinne der Erfindung die Energieeffizienz bei Betrieb des Fahrzeuges sowie die (aktuelle und erwartete) Lärm- und Schadstoffbelastung der Umgebung berücksichtigt werden. Beim Vorliegen mehrerer Betriebsmodi, die im Sinne der Energieeffizienz sowie der Lärm- und Schadstoffbelastung der Umgebung erlaubt sind, wird der Betriebsmodus gewählt, der ein höheres Maß an Automatisierung aufweist, als die anderen berechtigten Betriebsmodi.

Aber auch bei Fahrzeugen mit nur einer Antriebseinheit können durch eine intelligente Wahl der Betriebsparameter der Antriebseinheit und/oder der Getriebeeinheit, beispielweise durch eine entsprechende Ansteuerung der Getriebeeinheit, die Energieeffizienz optimiert und die Schadstoffwerte sowie die Lärmwerte in der unmittelbaren Umgebung des Fahrzeuges reduziert werden. Dies ist nicht Teil der beanspruchten Erfindung.

Im Rahmen der Energieeffizienz gemäß der Erfindung können zum Beispiel der aktuelle Ladezustand einer elektrischen Speichereinheit und/oder der Mindestladezustand der Speichereinheit nach dem Befahren der zu erwartenden Fahrstrecke S berücksichtigt werden. Im Rahmen des erfindungsgemäßen Verfahrens kann die Steuereinheit 10 die zu erwartende Fahrstrecke S des Fahrzeuges in mindestens eine oder mehrere zu durchfahrende Zonen Z unterteilen. Jeder der zu durchfahrenden Zone Z kann dabei eine bestimmte Einfahrbeschränkung bzw. eine zulässige Lärm- und Schadstoffbelastung zugeordnet werden, die insbesondere in Abhängigkeit von der Prognose P* bestimmt werden kann. Bei jeder der zu durchfahrenden Zonen Z kann eine Berechtigung des Fahrzeuges überprüft werden, die Zonen Z in mindestens einem verfügbaren Betriebsmodus zu durchfahren. Die Berechtigung kann dabei im Vergleich zur Einfahrbeschränkung bzw. zur zulässigen Lärm- und Schadstoffbelastung in der jeweiligen Zone verifiziert werden.

Bei einem Fahrzeug, welches eine Antriebseinheit in Form einer Verbrennungskraftmaschine aufweist, können Freigaben oder Verbote erteilt werden, mindestens eine oder mehrere zu durchfahrende Zonen Z in einem Betriebsmodus des Fahrzeuges zu befahren, bei welchem die Verbrennungskraftmaschine betrieben wird.

Bei einem Fahrzeug, welches mehrere Antriebseinheiten aufweist, können unterschiedliche Betriebsmodi, bei welchen verschiedene Antriebseinheiten einzeln oder in Kombination betrieben werden, auf ihre Berechtigung überprüft werden, mindestens eine oder mehrere zu durchfahrende Zonen Z in einem Betriebsmodus des Fahrzeuges zu befahren. Sollten mehrere Betriebsmodi eine Berechtigung erhalten, wird erfindungsgemäß der Betriebmodus bevorzugt, der ein höheres Maß an Automatisierung aufweist.

Die erfindungsgemäße Steuereinheit 10 kann in den Betrieb des Fahrzeuges aktiv eingreifen und/oder eine Empfehlung an den Fahrer, beispielsweise über Fahrerinformationssysteme, generieren.

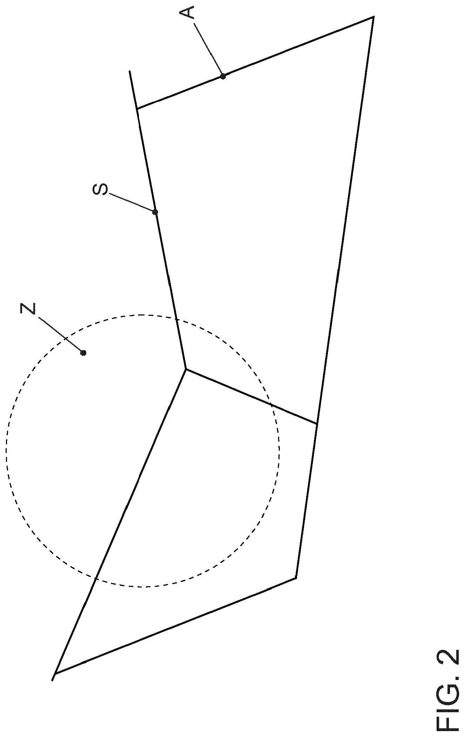

In der Figur 2 ist eine Fahrstrecke S gezeigt, die durch eine Zone Z führt. Die Zone Z kann beispielsweise als eine Umweltzone ausgeschildert oder erkannt werden. Für die Fahrstrecke S kann eine alternative Route A gewählt werden, die vorbei an der Zone Z führt.

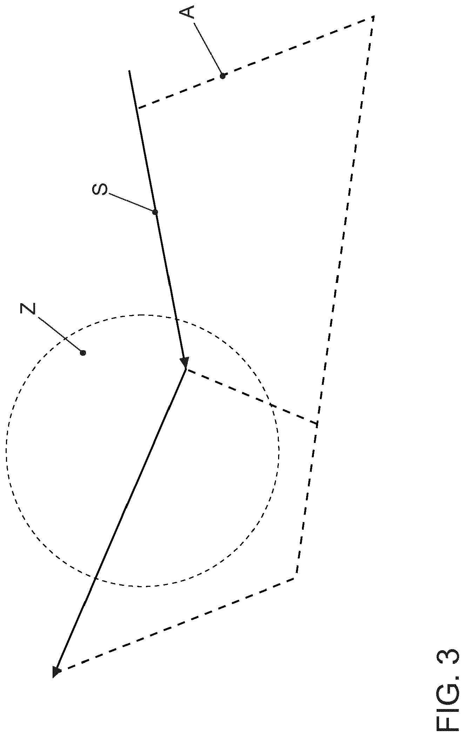

Die Figur 3 zeigt mithilfe von Pfeilen, wie eine Zone Z durchgefahren werden kann. Um hierzu eine Berechtigung im Sinne der Erfindung zu erhalten, muss eine elektrische Speichereinheit des Fahrzeuges aufgeladen sein. Dabei kann das Fahrzeug als ein rein elektrisches Fahrzeug oder als ein Hybridfahrzeug ausgeführt sein, welches in mindestens einem Betriebsmodus elektrisch fahren kann.

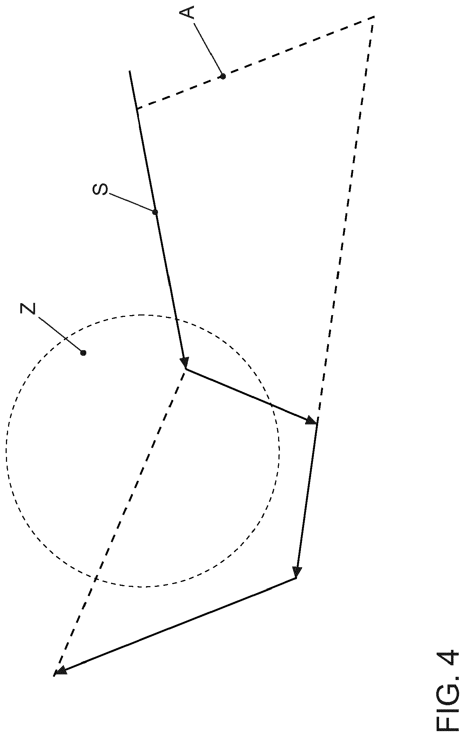

Die Figur 4 zeigt mithilfe von Pfeilen, wie eine Zone Z zum Teil durchgefahren werden kann. Um hierzu eine Berechtigung im Sinne der Erfindung zu erhalten, muss eine elektrische Speichereinheit des Fahrzeuges zumindest zum Teil aufgeladen sein. Dabei ist das Fahrzeug als ein Hybridfahrzeug ausgeführt, welches in mindestens einem Betriebsmodus elektrisch fahren kann.

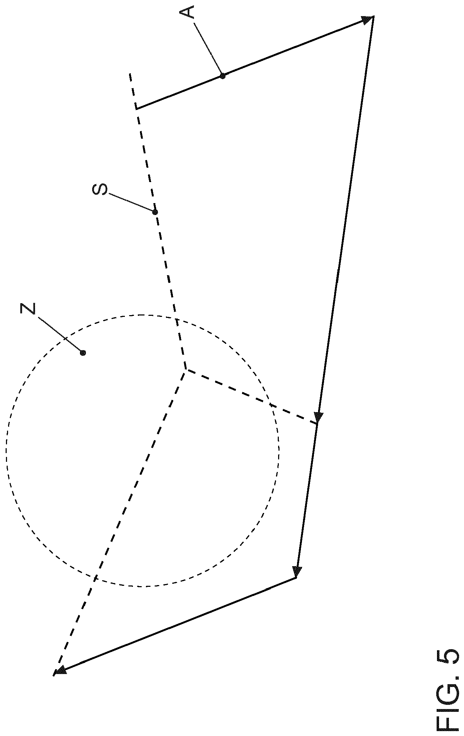

Die Figur 5 zeigt mithilfe von Pfeilen, wie die Zone Z umfahren werden kann. Die Situation ist für die Fahrzeuge empfehlenswert, die keine Berechtigung zur Einfahrt in die Zone im Sinne der Erfindung erhalten. Die Situation ist bei Fahrzeugen denkbar, die über keinen elektrischen Betriebsmodus verfügen.

Die voranstehende Beschreibung der Figuren beschreibt die vorliegende Erfindung ausschließlich im Rahmen von Beispielen.

### Bezugszeichenliste

- 10: Steuereinheit
- 11: Sende- und Empfangseinheit

- 20: Sensoreinheit

- 30: Navigationssystem

- 40: Assistenzsystem

- 100: Vorrichtung

- 200: Backendsystem
- 201: Sende- und Empfangseinheit
- 202: Speicher
- 203: Recheneinheit

- A: alternative Route
- K1: Kommunikationsverbindung
- K2: Kommunikationsverbindung
- K3: Kommunikationsverbindung
- K4: Kommunikationsverbindung
- P: Parameter
- P*: Prognose
- S: Fahrstrecke
- Z: Zone

## Patentansprüche

1. Verfahren zum Betrieb eines Fahrzeuges,
welches mindestens eine Antriebseinheit und/oder eine Getriebeeinheit aufweist,
wobei eine Steuereinheit (10) vorgesehen ist, um die mindestens eine Antriebseinheit und/oder die Getriebeeinheit anzusteuern,
wobei mindestens eine Sensoreinheit (20) vorgesehen ist, um mindestens einen fahrzeugexternen Parameter (P) zu erfassen,
und wobei die Steuereinheit (10) mit der mindestens einen Sensoreinheit (20) in einer Kommunikationsverbindung (K1) steht, um den mindestens einen fahrzeugexternen Parameter (P) zu erhalten,
**dadurch gekennzeichnet,**
**dass** die Steuereinheit (10) den mindestens einen fahrzeugexternen Parameter (P) auswertet und eine Prognose (P*) für den mindestens einen fahrzeugexternen Parameter (P) in Abhängigkeit von einer zu erwartenden Fahrstrecke (S) des Fahrzeuges erstellt,
und **dass** die Steuereinheit (10) beim Ansteuern der mindestens einen Antriebseinheit und/oder der Getriebeeinheit die Prognose (P*) für den fahrzeugexternen Parameter (P) berücksichtigt,
wobei die Steuereinheit (10) beim Betrieb des Fahrzeuges, welches mehrere Antriebseinheiten aufweist, unterschiedliche Betriebsmodi des Fahrzeuges auswertet, bei welchen verschiedene Antriebseinheiten einzeln oder in Kombination betrieben werden, und dem Betriebsmodus eine Präferenz zum Betrieb des Fahrzeuges erteilt, der ein höheres Maß an Automatisierung aufweist als die anderen Betriebsmodi, die ebenfalls eine Berechtigung zum Befahren der Fahrstrecke (S) haben.

2. Verfahren nach Anspruch 1,
**dadurch gekennzeichnet,**
**dass** die mindestens eine Sensoreinheit (20) die Luftqualität und/oder Lärmbelastung als den mindestens einen fahrzeugexternen Parameter (P) erfasst.

3. Verfahren nach Anspruch 1 oder 2,
**dadurch gekennzeichnet,**
**dass** die Steuereinheit (10) bei der zu erwartenden Strecke (S) des Fahrzeuges die aktuelle Zeit, die geplante Abfahrtzeit, die gewünschte Ankunftszeit, die aktuelle und erwartete Verkehrssituation und/oder Daten eines fahrzeuginternen und/oder eines fahrzeugexternen Navigationssystems (30) berücksichtigt.

4. Verfahren nach einem der vorhergehenden Ansprüche,
**dadurch gekennzeichnet,**
**dass** die Steuereinheit (10) ein fahrzeuginternes Navigationssystem (30) überwacht und dynamisch in Abhängigkeit von der Prognose (P*) aktualisiert,
und/oder dass die Steuereinheit (10) mit einem fahrzeugexternen Backendsystem (200) in einer Kommunikationsverbindung (K2) steht,
um die Prognose (P*) für den mindestens einen fahrzeugexternen Parameter (P) auf der zu erwartenden Fahrstrecke (S) des Fahrzeuges zwecks dessen Aktualisierung im Backendsystem (200) zu verifizieren.

5. Verfahren nach einem der vorhergehenden Ansprüche,
**dadurch gekennzeichnet,**
**dass** die Steuereinheit (10) die zu erwartende Fahrstrecke (S) des Fahrzeuges in eine oder mehrere zu durchfahrende Zonen (Z) unterteilt.

6. Verfahren nach Anspruch 5,
**dadurch gekennzeichnet,**
**dass** die Steuereinheit (10) beim Ansteuern der mindestens einen Antriebseinheit und/oder der Getriebeeinheit mindestens eine oder mehrere zu durchfahrende Zonen (Z) und eine Berechtigung des Fahrzeuges, die Zonen (Z) in mindestens einem verfügbaren Betriebsmodus zu durchfahren, berücksichtigt.

7. Verfahren nach einem der vorhergehenden Ansprüche,
**dadurch gekennzeichnet,**
**dass** die Steuereinheit (10) beim Betrieb des Fahrzeuges, welches eine Antriebseinheit in Form einer Verbrennungskraftmaschine aufweist, einen Betriebsmodus des Fahrzeuges, bei welchem die Verbrennungskraftmaschine betrieben wird, auf Berechtigung des Fahrzeuges prüft, mindestens eine oder mehrere zu durchfahrende Zonen (Z) in diesem Betriebsmodus zu durchfahren, und eine Freigabe oder ein Verbot erteilt, die Verbrennungskraftmaschine zu betreiben,
und/oder dass beim Betreiben der Verbrennungskraftmaschine die Getriebeeinheit automatisch angesteuert wird, um die Geschwindigkeit und den Schadstoffausstoß des Fahrzeuges zu optimieren.

8. Verfahren nach einem der vorhergehenden Ansprüche,
**dadurch gekennzeichnet,**
**dass** die Steuereinheit (10) beim Ansteuern der mindestens einen Antriebseinheit und/oder der Getriebeeinheit mindestens einen fahrzeuginternen Parameter zur Energieeffizienz berücksichtigt.

9. Verfahren nach einem der vorhergehenden Ansprüche,
**dadurch gekennzeichnet,**
**dass** die Steuereinheit (10) mit einem fahrzeugexternen Backendsystem (200) in einer Kommunikationsverbindung (K2) steht,
um die Berechtigung des Fahrzeuges zu verifizieren, die zu erwartende Fahrstrecke (S) des Fahrzeuges in mindestens einem Betriebsmodus des Fahrzeuges zu durchfahren,
wobei insbesondere das fahrzeugexterne Backendsystem (200) dem Fahrzeug Strafpunkte oder Bonuspunkte in Abhängigkeit von der befahrenen Fahrstrecke (S) erteilen kann.

10. Vorrichtung (100) zum Betrieb eines Fahrzeuges, welches mehrere Antriebseinheiten und optional eine Getriebeeinheit aufweist, aufweisend:
eine Steuereinheit (10), um die mehreren Antriebseinheiten und die optionale Getriebeeinheit anzusteuern,
und mindestens eine Sensoreinheit (20), um mindestens einen fahrzeugexternen Parameter (P) zu erfassen,
wobei die Steuereinheit (10) mit der mindestens einen Sensoreinheit (20) in einer Kommunikationsverbindung (K1) steht, um den mindestens einen fahrzeugexternen Parameter (P) zu erhalten,
**dadurch gekennzeichnet,**
**dass** die Steuereinheit (10) dazu ausgeführt ist, ein Verfahren nach einem der vorhergehenden Ansprüche auszuführen.

11. Fahrzeug mit einer Vorrichtung (100) zum Betrieb des Fahrzeuges nach dem vorhergehenden Anspruch.

## Claims

1. Method for operating a vehicle,
which has at least one drive unit and/or a transmission unit,
wherein a control unit (10) is provided in order to control the at least one drive unit and/or the transmission unit,
wherein at least one sensor unit (20) is provided in order to capture at least one parameter (P) outside the vehicle,
and wherein the control unit (10) is communicatively connected (K1) to the at least one sensor unit (20) in order to receive the at least one parameter (P) outside the vehicle,
**characterized**
**in that** the control unit (10) evaluates the at least one parameter (P) outside the vehicle and creates a prediction (P*) for the at least one parameter (P) outside the vehicle on the basis of an expected driving route (S) of the vehicle,
and **in that** the control unit (10) takes into account the prediction (P*) for the parameter (P) outside the vehicle when controlling the at least one drive unit and/or the transmission unit,
wherein, during operation of the vehicle, which has a plurality of drive units, the control unit (10) evaluates different operating modes of the vehicle in which different drive units are operated individually or in combination and gives preference for operating the vehicle to that operating mode which has a higher degree of automation than the other operating modes which are likewise authorized to travel on the driving route (S).

2. Method according to Claim 1,
**characterized**
**in that** the at least one sensor unit (20) captures the air quality and/or noise pollution as the at least one parameter (P) outside the vehicle.

3. Method according to Claim 1 or 2,
**characterized**
**in that** the control unit (10) takes into account the current time, the planned departure time, the desired arrival time, the current and expected traffic situation and/or data from a navigation system (30) inside and/or outside the vehicle for the expected route (S) of the vehicle.

4. Method according to one of the preceding claims,
**characterized**
**in that** the control unit (10) monitors a navigation system (30) inside the vehicle and dynamically updates it on the basis of the prediction (P*),
and/or in that the control unit (10) is communicatively connected (K2) to a backend system (200) outside the vehicle,
in order to verify the prediction (P*) for the at least one parameter (P) outside the vehicle on the expected driving route (S) of the vehicle for the purpose of updating it in the backend system (200).

5. Method according to one of the preceding claims,
**characterized**
**in that** the control unit (10) divides the expected driving route (S) of the vehicle into one or more zones (Z) to be driven through.

6. Method according to Claim 5,
**characterized**
**in that** the control unit (10) takes into account at least one or more zones (Z) to be driven through and authorization of the vehicle to drive through the zones (Z) in at least one available operating mode when controlling the at least one drive unit and/or the transmission unit.

7. Method according to one of the preceding claims,
**characterized**
**in that** the control unit (10), during operation of the vehicle, which has a drive unit in the form of an internal combustion engine, checks an operating mode of the vehicle, in which the internal combustion engine is operated, for authorization of the vehicle to drive through at least one or more zones (Z) to be driven through in this operating mode, and grants an approval or prohibition to operate the internal combustion engine, and/or in that the transmission unit is controlled automatically during operation of the internal combustion engine in order to optimize the speed and the pollutant emission of the vehicle.

8. Method according to one of the preceding claims,
**characterized**
**in that** the control unit (10) takes into account at least one energy efficiency parameter inside the vehicle when controlling the at least one drive unit and/or the transmission unit.

9. Method according to one of the preceding claims,
**characterized**
**in that** the control unit (10) is communicatively connected (K2) to a backend system (200) outside the vehicle,
in order to verify the authorization of the vehicle to drive through the expected driving route (S) of the vehicle in at least one operating mode of the vehicle, wherein the backend system (200) outside the vehicle, in particular, can issue penalty points are bonus points to the vehicle on the basis of the driving route (S) travelled on.

10. Apparatus (100) for operating a vehicle,
which has a plurality of drive units and optionally a transmission unit,
having:
a control unit (10) in order to control the plurality of drive units and the optional transmission unit,
and at least one sensor unit (20) in order to capture at least one parameter (P) outside the vehicle,
wherein the control unit (10) is communicatively connected (K1) to the at least one sensor unit (20) in order to receive the at least one parameter (P) outside the vehicle,
**characterized**
**in that** the control unit (10) is designed to carry out a method according to one of the preceding claims.

11. Vehicle having an apparatus (100) for operating a vehicle according to the preceding claim.

## Revendications

1. Procédé pour faire fonctionner un véhicule,
lequel possède au moins un groupe propulseur et/ou une unité de transmission,
une unité de commande (10) étant présente pour commander l'au moins un groupe propulseur et/ou l'unité de transmission,
au moins une unité de capteur (20) étant présente pour acquérir au moins un paramètre (P) externe au véhicule, et l'unité de commande (10) se trouvant dans une liaison de communication (K1) avec l'unité de capteur (20) afin d'obtenir l'au moins un paramètre (P) externe au véhicule,
**caractérisé en ce**
**que** l'unité de commande (10) interprète l'au moins un paramètre (P) externe au véhicule et établit un pronostic (P*) pour l'au moins un paramètre (P) externe au véhicule en fonction d'un trajet (S) à attendre,
et en ce que l'unité de commande (10), lors de la commande de l'au moins un groupe propulseur et/ou de l'unité de transmission, tient compte du pronostic (P*) pour le paramètre (P) externe au véhicule,
l'unité de commande (10), lors du fonctionnement du véhicule, lequel possède plusieurs groupes propulseurs, interprète différents modes de fonctionnement du véhicule avec lesquels différents groupes propulseurs fonctionnent individuellement ou de manière combinée, et confère une préférence pour le fonctionnement du véhicule au mode de fonctionnement qui présente un indice d'automatisation plus élevé que les autres modes de fonctionnement, qui ont également une autorisation pour parcourir le trajet (S).

2. Procédé selon la revendication 1, **caractérisé en ce que** l'au moins une unité de capteur (20) acquiert la qualité de l'air et/ou la pollution sonore en tant que l'au moins un paramètre (P) externe au véhicule.

3. Procédé selon la revendication 1 ou 2, **caractérisé en ce que** l'unité de commande (10), lors le trajet (S) à attendre du véhicule, tient compte de l'heure actuelle, de l'heure de départ, de l'heure d'arrivée souhaitée, de la situation du trafic actuelle et attendue et/ou des données d'un système de navigation (30) interne au véhicule et/ou externe au véhicule.

4. Procédé selon l'une des revendications précédentes,
**caractérisé en ce**
**que** l'unité de commande (10) surveille un système de navigation (30) interne au véhicule et l'actualise dynamiquement en fonction du pronostic (P*),
et/ou en ce que l'unité de commande (10) se trouve dans une liaison de communication (K2) avec un système principal (200) externe au véhicule,
afin de vérifier le pronostic (P*) pour l'au moins un paramètre (P) externe au véhicule sur le trajet (S) à attendre du véhicule en vue de son actualisation dans le système principal (200).

5. Procédé selon l'une des revendications précédentes, **caractérisé en ce que** l'unité de commande (10) subdivise le trajet (S) à attendre du véhicule en une ou plusieurs zones (Z) à traverser.

6. Procédé selon la revendication 5, **caractérisé en ce que** l'unité de commande (10), lors de la commande de l'au moins un groupe propulseur et/ou de l'unité de transmission, tient compte d'une ou plusieurs zones (Z) à traverser et d'une autorisation du véhicule à traverser les zones (Z) dans au moins un mode de fonctionnement disponible.

7. Procédé selon l'une des revendications précédentes,
**caractérisé en ce**
**que** l'unité de commande (10), lors du fonctionnement du véhicule, lequel possède un groupe propulseur sous la forme d'un moteur à combustion interne, vérifie pour un mode de fonctionnement du véhicule avec lequel le moteur à combustion interne fonctionne, su le véhicule à l'autorisation de traverser une ou plusieurs zones (Z) à traverser dans ce mode de fonctionnement, et délivre une validation ou une interdiction de faire fonctionner le moteur à combustion interne,
et/ou en ce que lors du fonctionnement du moteur à combustion interne, l'unité de transmission est commandée automatiquement afin d'optimiser la vitesse et les émissions de polluants du véhicule.

8. Procédé selon l'une des revendications précédentes, **caractérisé en ce que** l'unité de commande (10), lors de la commande de l'au moins un groupe propulseur et/ou de l'unité de transmission, tient compte d'au moins un paramètre interne au véhicule concernant l'efficacité énergétique.

9. Procédé selon l'une des revendications précédentes,
**caractérisé en ce**
**que** l'unité de commande (10) se trouve dans une liaison de communication (K2) avec un système principal (200) externe au véhicule,
afin de vérifier l'autorisation du véhicule à traverser le trajet (S) à attendre du véhicule dans au moins un mode de fonctionnement du véhicule,
le système principal (200) externe au véhicule pouvant notamment accorder au véhicule des points de pénalité ou des points de bonus en fonction du trajet (S) parcouru.

10. Dispositif (100) pour faire fonctionner un véhicule, lequel possède plusieurs groupes propulseurs et, en option, une unité de transmission,
possédant :
une unité de commande (10) afin de commander les plusieurs groupes propulseurs et l'unité de transmission optionnelle,
et au moins une unité de capteur (20) afin d'acquérir au moins un paramètre (P) externe au véhicule,
l'unité de commande (10) se trouvant dans une liaison de communication (K1) avec l'unité de capteur (20) afin d'obtenir l'au moins un paramètre (P) externe au véhicule,
**caractérisé en ce**
**que** l'unité de commande (10) est configurée pour mettre en œuvre un procédé selon l'une des revendications précédentes.

11. Véhicule comprenant un dispositif (100) pour faire fonctionner le véhicule selon la revendication précédente.
